# EUROPÄISCHE PATENTANMELDUNG

(11) **EP 4 837 695 A1**
(43) Veröffentlichungstag der Anmeldung: **11.11.2026**
(21) Anmeldenummer: 26176401.3
(22) Anmeldetag: 05.05.2026
(51) Int. Cl.: B23Q 5/58, H01H 36/00

(54) **HANDWERKSZEUG MIT MEHRTEILIGEM SCHALTELEMENT**

(30) Priorität: 05.05.2025 DE 202025102461 U
(71) Anmelder: Geco Germany GmbH, 33142 Büren (DE)
(72) Erfinder: GESCHWINDER, Andreas, 33142 Büren (DE)
(74) Vertreter: Ostermann, Thomas

(57) **Zusammenfassung**

Die Erfindung betrifft ein Handwerkszeug zum Bearbeiten von Gegenständen, insbesondere zum Ablösen eines Fleisches von Knochen, mit einem Griffteil (1) zum manuellen Erfassen des Handwerkszeug, mit einer Bearbeitungseinrichtung (2), die sich an einer ersten Stirnseite (3) des Griffteils (1) anschließt, mit einer Antriebstrangleitung (4), die sich an einer zweiten Stirnseite (5) des Griffteils (1) anschließt, mit einer Bedieneinheit (13), mittels derer Betätigung die Bearbeitungseinrichtung (2) einschaltbar ist, und mit einer Sicherungseinheit (22), die bei Betätigung eine Freigabe der Bedieneinheit (13) bewirkt, wobei die Bedieneinheit (13) mit einem Schaltelement (19) gekoppelt ist, wobei ein nicht elektrischer Teil (18) des Schaltelementes (19) fest mit der Bedieneinheit (13) und ein elektrischer Teil (20) des Schaltelementes (19) fest mit einem von den Griffteil (1) lösbar verbundenen Kopplungsstück (11) verbunden ist.

## Beschreibung

Die Erfindung betrifft ein Handwerkszeug nach dem Oberbegriff des Patentanspruchs 1.

Aus der EP 4 480 650 A1 ist ein Handwerkszeug zum Bearbeiten von Fleisch in der Lebensmittelindustrie bekannt, das als Trimmer zur Fettentfernung von Fleisch dient. Es weist ein Griffteil zum manuellen Erfassen des Handwerkszeugs auf. Auf einer stirnseitigen Bearbeitungsseite schließt sich an den Griffteil eine Bearbeitungseinrichtung an, nämlich eine Messereinrichtung. Der Griffteil ist rohrförmig ausgebildet, so dass innerhalb des Griffteils ein Antriebstrang mit einer flexiblen Antriebswelle verläuft. Ein freies Ende der Antriebswelle ist mit der Messereinrichtung gekoppelt. Auf einer der Bearbeitungseinrichtung abgewandten Stirnseite des Griffteils verläuft der Antriebsstrang weiter durch eine Antriebsstrangleitung, die zu einem Motor führt und von demselben angetrieben wird. Zum Einschalten der Bearbeitungseinrichtung ist eine Bedieneinheit mit einem Bedienhebel vorgesehen. Der Bedienhebel ist derart angeordnet, dass mit manuellem Betätigen desselben ein Abtriebsende des Antriebstranges axial in eine Kupplungsposition verschoben wird, in der der Antriebsstrang eine formschlüssige Verbindung zu einem Zahnrad der Bearbeitungseinrichtung eingeht und sich diese in einer Arbeitsstellung befindet. Mit Loslassen des Bedienhebels wird die formschlüssige Verbindung gelöst, so dass sich die Bearbeitungseinrichtung in einer Nichtarbeitsstellung befindet. Zusätzlich ist eine Sicherungseinheit vorgesehen, die einen Sicherungshebel aufweist. Der Sicherungshebel befindet sich in Ausgangsstellung in einer Sicherungsstellung, in der bei Betätigen des Bedienhebels das Verschieben des Antriebstranges verhindert wird. Erst wenn der Sicherungshebel selbst betätigt wird, ermöglicht die damit verbundene Freigabestellung des Sicherungshebels eine Verschiebung des Antriebstranges durch den Bedienhebel. Nachteilig an dem bekannten Handwerkszeug ist, dass das Schalten der Bearbeitungseinrichtung relativ aufwendig ist.

Aufgabe der vorliegenden Erfindung ist es daher, ein Handwerkszeug derart weiterzubilden, dass die Bedienung verbessert, es einen kompakten Aufbau aufweist und eine lange Lebensdauer ermöglicht wird.

Zur Lösung dieser Aufgabe weist die Erfindung die Merkmale des Patentanspruchs 1 auf.

Der besondere Vorteil der Erfindung besteht darin, dass ein einfaches Einschalten des Handwerkszeug mittels eines Schaltelementes erfolgt, das einen nicht elektrischen Teil und einen elektrischen Teil aufweist. Der elektrische Teil des Schaltelementes ist in einem von einem Griffteil des Handwerkszeug lösbaren Kopplungsstück integriert. Lediglich der nicht elektrische Teil des Schaltelementes ist in dem Griffteil integriert. Vorteilhaft kann das stark beanspruchte Griffteil von dem Kopplungsstück entfernt und dann einfach desinfiziert werden. Vorteilhaft wird hierdurch eine lange Haltbarkeit des Handwerkszeug gewährleistet.

Nach einer Weiterbildung der Erfindung ist das Schaltelement als ein elektromagnetisches Schaltelement ausgebildet. Der nicht elektrische Teil des Schaltelementes ist als ein Permanentmagnet ausgebildet, der einfach in dem Kopplungsstück verkapselt und somit geschützt gelagert sein kann. Eine einfache Verbringung des nicht elektrischen Teils des Schaltelementes in die Nähe des elektrischen Teil des Schaltelementes führt zu einer Wirkverbindung derselben, so dass das Handwerkszeug bzw. die Bearbeitungseinrichtung eingeschaltet werden kann. Der Kraftaufwand hierfür ist relativ gering.

Nach einer Weiterbildung der Erfindung ist das Schaltelement als ein Reed-Schaltelement ausgebildet, so dass auf bereits verfügbare Schaltelemente zurückgegriffen werden kann.

Nach einer Weiterbildung der Erfindung ist der Bedienhebel drehfest mit einem Verbindungsbügel verbunden, an dem der nicht elektrische Teil des Schaltelementes fest angeordnet ist. Der Verbindungsbügel ist drehbar an dem Griffteil angeordnet. Die Drehachse befindet sich auf einer dem Bedienhebel zugewandten Seite des Verbindungsbügels, so dass der Hebelarm des Verbindungsbügels einem Durchmesser des Griffteils entspricht. Hierdurch ist ein ausreichend großer Verstellweg des nicht elektrischen Teils des Schaltelementes gegeben zwischen einer Nichtwirkverbindungsposition, in der der nicht elektrische Teil des Schaltelementes beabstandet zu dem elektrischen Teil des Schaltelementes angeordnet ist, und einer Wirkverbindungsposition, in der der nicht elektrische Teil des Schaltelementes in der Nähe des elektrischen Teils des Schaltelementes angeordnet ist.

Nach einer Weiterbildung der Erfindung weist die Sicherungseinheit ein Sicherungsschiebeteil auf, das ein widerhakenförmliches Ende aufweist. Bei Nichtbetätigung der Sicherungseinheit befindet sich das Sicherungsschiebeteil in Sicherungsstellung, in der die Bewegung des Verbindungsbügels in die Wirkverbindungsposition des nicht elektrischen Teils des Schaltelementes zu dem elektrischen Teil des Schaltelementes verhindert wird. Bei Betätigung der Sicherungseinheit wird das widerhakenförmliches Ende des Sicherungsschiebeteils in einer Freigabestellung verbracht, in der die Bewegung des Verbindungsbügels freigegeben wird, so dass bei Betätigung des Bedienhebels die Bearbeitungseinrichtung eingeschaltet werden kann. Vorteilhaft kann bei Betätigung der Sicherungseinheit, genauso wie bei der Betätigung des Bedienhebels, der erforderliche Kraftaufwand für die Bedienperson gering gehalten werden.

Nach einer Weiterbildung der Erfindung ist das Kopplungsstück derart ausgebildet, dass bei Verriegelung mit dem Griffteil eine Kopplung der in der Antriebstrangleitung enthaltenen flexiblen Antriebswelle mit einen innerhalb des Griffteils angeordneten Antriebswellenstück ermöglicht wird. Vorteilhaft kann hierdurch auf eine Axialbewegung der flexiblen Antriebswelle bei Betätigung des Bedienhebels verzichtet werden.

Nach einer Weiterbildung der Erfindung ist eine Verriegelungseinrichtung vorgesehen, die eine lösbare Verbindung zwischen dem Kopplungsstück und den Griffteil ermöglicht. Vorzugsweise weist die Verriegelungseinrichtung einen Rastknopf auf, mittels dessen sowohl die mechanische Kopplung des Antriebstrang einerseits und die Kopplung des geteilten Schaltelementes andererseits eingestellt und gelöst werden kann.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Figur 1: eine perspektivische Darstellung eines Handwerkszeugs in einer Ausgangsstellung,
- Figur 2: eine Darstellung des Handwerkszeug von oben in der Ausgangsstellung,
- Figur 3: eine Darstellung des Handwerkszeug von unten in der Ausgangsstellung,
- Figur 4: eine Darstellung des Handwerkszeug von der Seite in der Ausgangsstellung,
- Figur 5: einen Längsschnitt durch das Handwerkszeug in der Ausgangsstellung desselben und
- Figur 6: einen Längsschnitt durch das Handwerkszeug in einer Betätigungsstellung desselben.

Ein Handwerkszeug dient zum Bearbeiten von Gegenständen. Im vorliegenden Ausführungsbeispiel dient das Handwerkszeug zum Schneiden von Fleisch, insbesondere zum Ablösen des Fleisches von Knochen in der Lebensmittelindustrie.

Alternativ kann das Handwerkszeug auch als ein Bohrer, Kreissäge, Stichsäge oder dergleichen ausgebildet sein. Gemeinsam ist dem erfindungsgemäßen Handwerkszeug, dass es ein Griffteil 1 zum manuellen Erfassen durch einen Bedienperson, eine Bearbeitungseinrichtung 2 an einer ersten Stirnseite 3 des Griffteils 1 und eine Antriebstrangleitung 4 an einer zu der ersten Stirnseite 3 gegenüberliegenden zweiten Stirnseite 5 des Griffteils 1 aufweist.

Im vorliegenden Ausführungsbeispiel ist die Bearbeitungseinrichtung 2 als eine Schneideinrichtung oder Messereinrichtung ausgebildet, mittels dessen sich eine Fettentfernung von Fleisch in der Lebensmittelindustrie erfolgen kann.

Das Griffteil 1 ist rohrförmig ausgebildet und ermöglicht die Aufnahme eines Antriebswellenstücks 6 eines Antriebsstrangs 7. Das Antriebswellenstück 6 weist eine Antriebswelle auf, die über ein Zahnrad 8 mit einem Kreismesser 9 der Schneideinrichtung 2 gekoppelt ist.

Die Antriebstrangleitung 4 umfasst eine Antriebswelle 10, die mit dem Antriebswellenstück 8 in der Montagestellung gekoppelt ist. Die Antriebswelle 10 ist in einem Kopplungsstück 11 geführt, dass über eine Verriegelungseinrichtung 12 lösbar mit der zweiten Stirnseite 5 des Griffteils 1 verbunden ist.

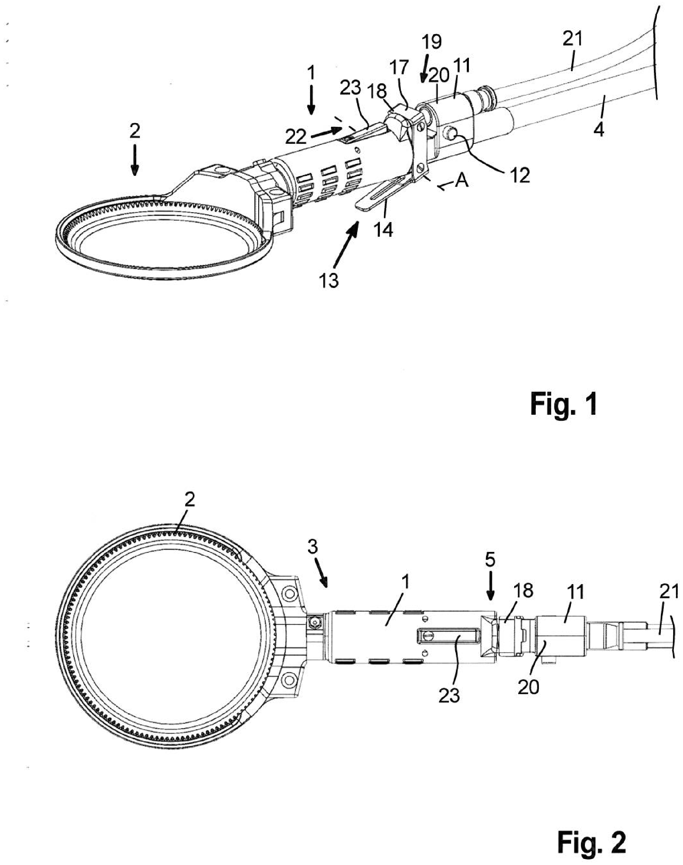

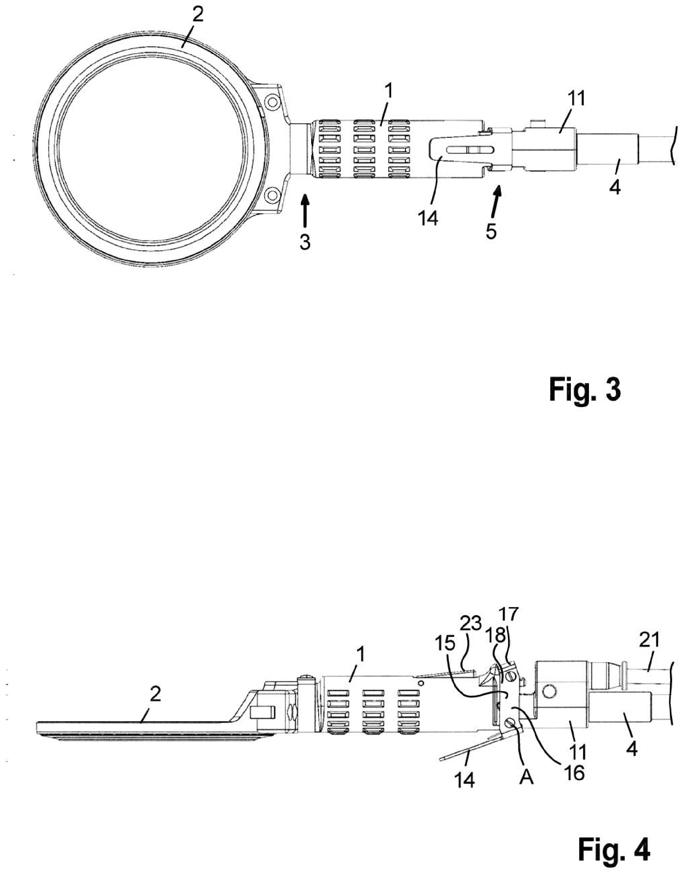

Das Handwerkszeug umfasst eine Bedieneinheit 13 mit einem Bedienhebel 14, der sich bei Nichtbetätigung federvorgespannt in einer von den Griffteil 1 entfernten Ausgangsstellung entsprechend der Figuren 1-5 befindet. Der Bedienhebel 14 ist fest bzw. drehfest mit einem Verbindungsbügel 15 verbunden. Der Verbindungsbügel 15 ist drehbar bzw. schwenkbar um eine Achse A an den Griffteil 1 gelagert. Die Achse A befindet sich in der Nähe eines nichtfreien Endes des Bedienhebels 14.

Der Verbindungsbügel 15 ist U-förmig ausgebildet, wobei zwischen freien Enden der beiden Schenkel 16 des Verbindungsbügels 15 das nichtfreie Ende des Bedienhebels 14 angeordnet ist. Ein Scheitel 17 des Verbindungsbügels 15 ist auf einer zu dem Bedienhebel 14 gegenüberliegenden Axialseite des Griffteils 1 angeordnet. Auf dieser Seite ist ein nicht elektrischer Teil 18 eines Schaltelementes 19 in dem Verbindungsbügel 15 integriert angeordnet. Somit ist der nicht elektrische Teil 18 des Schaltelementes 19 fest mit dem Bedienhebel 14 verbunden.

Ein elektrischer Teil 20 des Schaltelementes 19 ist in dem Kopplungsstück 11 angeordnet. Der elektrische Teil 20 des Schaltelementes 19 ist mit einer elektrischen Leitung 21 verbunden, die an einer nicht dargestellten elektrischen Stromquelle angeschlossen ist. Die elektrische Leitung 21 ist parallel zu der Antriebswelle 10 geführt. Die Antriebswelle 10 ist mit einem nicht dargestellten Servomotor verbunden bzw. gekoppelt.

Das Schaltelement 19 ist als ein elektromagnetisches Schaltelement ausgebildet. Das Schaltelement 19 ist zweiteilig ausgebildet. Der nicht elektrische Teil 18 ist in dem Verbindungsbügel 15 angeordnet. Der elektrische Teil 20 ist in dem Kopplungsstück 11 fest angeordnet.

Vorzugsweise ist das Schaltelement 19 als ein Reed-Schaltelement ausgebildet. Der nicht elektrische Teil 18 des Schaltelementes 19 ist als eine Permanentmagnet ausgebildet.

Bei Nichtbetätigen des Bedienhebels 14 ist der nicht elektrische Teil 18 des Schaltelementes 19 in einer Nichtwirkverbindungsposition zu dem elektrischen Teil 19 des Schaltelementes 19. Bei Betätigung des Bedienhebels 14 wird der Verbindungsbügel 15 um die Achse A verschwenkt, so dass der nicht elektrische Teil 18 des Schaltelementes 19 in eine Wirkverbindungsposition zu dem elektrischen Teil 21 des Schaltelementes 19 verbracht wird. Der nicht elektrische Teil 19 des Schaltelementes 19 befindet sich in der Nähe des elektrischen Teils 21 des Schaltelementes 19, so dass das Magnetfeld auf den elektrischen Teil 21 wirken kann.

Eine Länge der Schenkel 18 des Verbindungsbügels 15 entspricht im Wesentlichen einem Durchmesser d des Griffteils 1, so dass der Weg zwischen der Nichtwirkverbindungsposition und der Wirkverbindungsposition des nicht elektrischen Teils 18 zu dem elektrischen Teil 21 ausreichend groß ist.

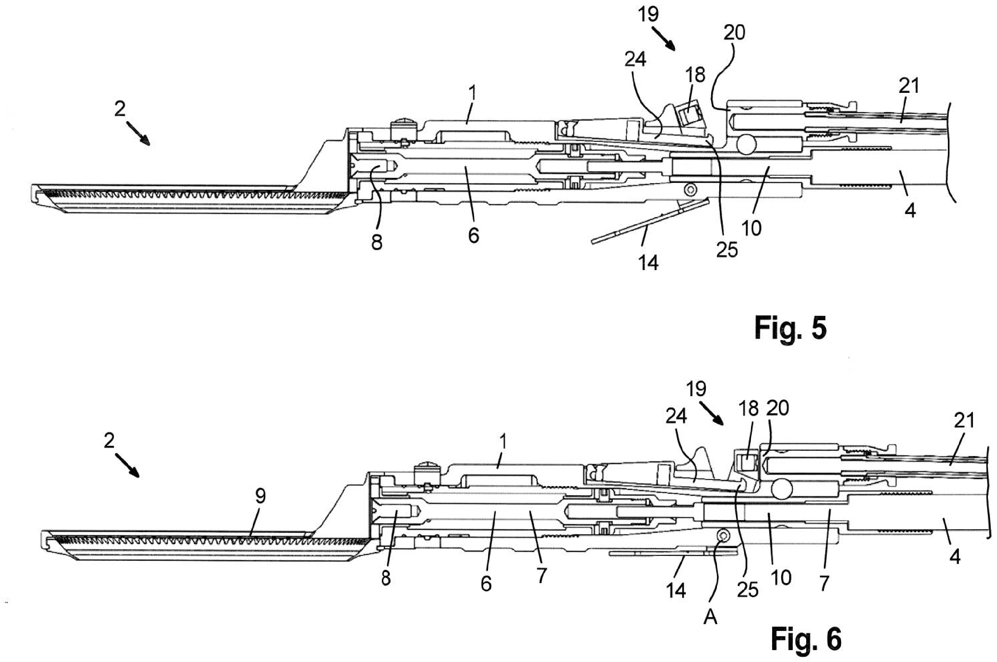

In der Wirkverbindungsposition des nicht elektrischen Teils 18 zu dem elektrischen Teil 21 gemäß Figur 6 ist die Schneideinrichtung 2 eingeschaltet. In der Nichtwirkverbindungsposition des nicht elektrischen Teils 18 zu dem elektrischen Teil 20 gemäß den Figuren 1 bis 5 ist die Schneideinrichtung 2 ausgeschaltet.

Zur Vermeidung eines versehentlichen Einschaltens der Bearbeitungseinrichtung 2 ist eine Sicherungseinheit 22 vorgesehen, die ein Sicherungsmittel 23 (Sicherungstaste oder Sicherungshebel) umfasst. Bei Nichtbetätigung der Sicherungseinheit 22 bzw. des Sicherungsmittels 23 befindet sich dieselbe in einer Sicherungsstellung, in der ein Sicherungsschiebeteil 24 mit einer widerhakenförmigen Ende 25 desselben ein Verschwenken des Verbindungsbügels 15 verhindert oder blockiert. Erst wenn das Sicherungsmittel 23 betätigt wird, kann das Sicherungsschiebeteil 24 durch Linearbewegung, vorzugsweise in Axialrichtung des Griffteils 1, in einer Freigabestellung verbracht werden, in der der Verbindungsbügels 15 verschwenkt werden kann ist und damit der nicht elektrische Teil 18 des Schaltelementes 19 in die Wirkverbindungsposition verbracht werden kann. In der Freigabestellung der Sicherungseinheit 22 kann der Bedienhebel 14 betätigt werden, sodass die Bearbeitungseinheit 2 eingeschaltet werden kann.

## Patentansprüche

1. Handwerkszeug zum Bearbeiten von Gegenständen, insbesondere zum Ablösen eines Fleisches von Knochen, mit einem Griffteil (1) zum manuellen Erfassen des Handwerkszeug, mit einer Bearbeitungseinrichtung (2), die sich an einer ersten Stirnseite (3) des Griffteils (1) anschließt, mit einer Antriebstrangleitung (4), die sich an einer zweiten Stirnseite (5) des Griffteils (1) anschließt, mit einer Bedieneinheit (13), mittels derer Betätigung die Bearbeitungseinrichtung (2) einschaltbar ist, und mit einer Sicherungseinheit (22), die bei Betätigung eine Freigabe der Bedieneinheit (13) bewirkt, **dadurch gekennzeichnet, dass** die Bedieneinheit (13) mit einem Schaltelement (19) gekoppelt ist, wobei ein nicht elektrischer Teil (18) des Schaltelementes (19) fest mit der Bedieneinheit (13) und ein elektrischer Teil (20) des Schaltelementes (19) fest mit einem von den Griffteil (1) lösbar verbundenen Kopplungsstück (11) verbunden ist.

2. Handwerkszeug nach Anspruch 1, **dadurch gekennzeichnet, dass** Schaltelement (19) als ein elektromagnetisches Schaltelement ausgebildet ist.

3. Handwerkszeug nach Anspruch 1 oder 2, **dadurch gekennzeichnet, dass** das Schaltelement (19) als ein Reed-Schaltelement ausgebildet ist.

4. Handwerkszeug nach einem der Ansprüche 1 bis 3, **dadurch gekennzeichnet, dass** die Bedieneinheit (13) einen federvorgespannten Bedienhebel (14) aufweist und dass der nicht elektrische Teil (18) des Schaltelementes (19) auf einer dem Bedienhebel (14) gegenüberliegenden Axialseite des Griffteils (1) angeordnet ist.

5. Handwerkszeug nach Anspruch 3 oder 4, **dadurch gekennzeichnet, dass** der nicht elektrische Teil (18) des Reed-Schaltelementes (19) als ein Permanentmagnet ausgebildet ist.

6. Handwerkszeug nach einem der Ansprüche 1 bis 5, **dadurch gekennzeichnet, dass** der Bedienhebel (14) drehfest mit einem Verbindungsbügel (15) verbunden ist, an dem der nicht elektrische Teil (18) des Schaltelementes (19) fest angeordnet ist.

7. Handwerkszeug nach einem der Ansprüche 1 bis 6, **dadurch gekennzeichnet, dass** der Verbindungsbügel (15) schwenkbar an den Griffteil (1) gelagert ist.

8. Handwerkszeug nach einem der Ansprüche 1 bis 7, **dadurch gekennzeichnet, dass** die Sicherungseinheit (22) ein Sicherungsschiebeteil (24) aufweist mit einem widerhakenförmigen Ende (25), wobei das widerhakenförmige Ende (25) sich in einer Sicherungsstellung mit dem Verbindungsbügel (15) derart verhakt, dass sich der nicht elektrische Teil (18) des Schaltelementes (19) in einer Nichtwirkverbindungsposition zu dem elektrischen Teil (20) des Schaltelementes (19) befindet, und wobei das widerhakenförmige Ende (25) in einer Freigabestellung den Verbindungsbügel (15) freigibt zur Bewegung desselben in eine Wirkverbindungsposition des nicht elektrischen Teils (18) des Schaltelementes (19) zu dem elektrischen Teil (20) des Schaltelementes (19).

9. Handwerkszeug nach einem der Ansprüche 1 bis 8, **dadurch gekennzeichnet, dass** die Sicherungseinheit (22) einen Sicherungshebel oder eine Sicherungstaste (23) aufweist zur Betätigung derselben, wobei der Sicherungshebel bzw. die Sicherungstaste (23) auf einer zu dem Bedienhebel (14) gegenüberliegenden Axialseite des Griffteils (1) angeordnet ist.

10. Handwerkszeug nach einem der Ansprüche 1 bis 9, **dadurch gekennzeichnet, dass** das Griffteil (1) rohrförmig ausgebildet ist zur Aufnahme eines Antriebswellenstücks (6) und dass das Kopplungsstück (11) doppelrohrförmig ausgebildet ist zur Aufnahme eines Endes der Antriebswelle (10) und zur Aufnahme eines Endes einer elektrischen Leitung (21).

11. Handwerkszeug nach einem der Ansprüche 1 bis 10, **dadurch gekennzeichnet, dass** das Kopplungsstück (11) ein Gehäuse zur Aufnahme des elektrischen Teils (20) des Schaltelementes (19) aufweist.

12. Handwerkszeug nach einem der Ansprüche 1 bis 11, **dadurch gekennzeichnet, dass** eine Verriegelungseinrichtung (12) vorgesehen ist zur lösbaren Verbindung zwischen dem Kopplungsstück (11) und dem Griffteil (1).
